## Europäisches Patentamt

## European Patent Office

## Office européen des brevets

(19)

(11) Veröffentlichungsnummer: **0 247 301**
**B1**

(12) # EUROPÄISCHE PATENTSCHRIFT

(45) Veröffentlichungstag der Patentschrift:
**07.11.90**

(51) Int. Cl.⁵: **H02K 17/10,** H02K 5/167,
H02K 5/173

(21) Anmeldenummer: **87103420.3**

(22) Anmeldetag: **10.03.87**

(54) **Asymmetrischer Spaltpolmotor.**

(30) Priorität: **28.05.86 DE 3617989**

(43) Veröffentlichungstag der Anmeldung:
**02.12.87 Patentblatt 87/49**

(45) Bekanntmachung des Hinweises auf die Patenterteilung:
**07.11.90 Patentblatt 90/45**

(84) Benannte Vertragsstaaten:
**AT BE CH DE ES FR GB IT LI LU NL SE**

(56) Entgegenhaltungen:
**DE-A- 3 326 543**
**DE-B- 2 727 920**
**US-A- 3 626 221**
**US-A- 3 786 290**
**US-A- 4 013 910**
**US-A- 4 482 832**
**US-A- 4 496 869**

(73) Patentinhaber: **ebm Elektrobau Mulfingen GmbH & Co.,
D-7119 Mulfingen(DE)**

(72) Erfinder: **Sturm, Gerhard, Gaisbergweg 8,
D-7119 Mulfingen(DE)**

(74) Vertreter: **Patentanwälte Dr. Solf & Zapf,
Zeppelinstrasse 53, D-8000 München 80(DE)**

ACTORUM AG

## Beschreibung

Die vorliegende Erfindung betrifft einen asymmetrischen Spaltpolmotor mit einem Stator aus einem lamellierten Blechpaket gebildet aus einem C-förmigen Joch zwischen dessen freien Zangenschenkeln ein Jochsteg eingepreßt ist, auf dem eine Hauptwicklung sitzt, und im die Zangenschenkel verbindenden C-Schenkel eine kurzgeschlossene Hilfswicklung und in einer Ausnehmung dieses Schenkels ein lamellierter Kurzschlußläuferrotor mit geringem Luftspalt zum Stator auf einer Motorwelle drehbar angeordnet sind.

Aus der DE-OS 32 46 595 ist bereits ein derartiger Motor bekannt. Dabei ist die Welle des Rotors in einer sich im Zentrum des Rotorblechpaketes befindlichen Bohrung untergebracht. Zum Fixieren des auf der der Welle befestigten Rotors am Statorblechpaket dient ein beidseitig je am Statorblechpaket verschraubtes Lagerschild mit integrierten Lagerelementen. Bei dieser Anordnung von Welle und Lager ist der Durchmesser des Rotors relativ klein, und die axiale Länge des Motors wird durch die stirnseitig aufgesetzten Lagerschilde übermäßig vergrößert. Auf der Welle des Rotors ist beispielsweise ein Lüfterrad befestigbar.

Bei derart bekannten Motoren, wie sie eingangs beschrieben sind, tritt das Problem auf, daß im Falle der Erhitzung der Rotorwelle durch äußere Einflüsse eine sehr hohe thermische Belastung auf das Lager einwirkt, was zu einem Ausfall der Lager und damit des Motors führen kann. Diese Probleme treten insbesondere bei Motoren auf, die zum Antrieb von Lüfterrädern verwendet werden, die Teile von Heißluftgebläsen in Back-, Grill- oder Bratgeräten sind. Durch die Erhitzung bzw. Aufheizung des Lüfterrades kommt ein Wärmefluß zustande, der ausgehend vom Lüfterrad über die Welle, die Lager und Lagerschilde zum Statorblechpaket führt. Dieser Wärmefluß über die Lagerelemente kann zu einer Zersetzung des Öles bzw. des Fettes führen. Im äußersten Fall kann dies zu einem Trockenlaufen und damit zu einer Zerstörung des Lagers, zumindest aber zu einer wesentlichen Verminderung der Lebensdauer des Lagers führen. In dieser Hinsicht sind Gleitlagerausführungen besonders anfällig.

Bei Kugellagerausführungen tritt diese thermische Belastung nicht im selben Maße in den Vordergrund wie bei Gleitlagern. Hier wirkt sich aber die mangelnde Möglichkeit der Justierbarkeit der Motorwelle aus. Da sich durch die jeweils stirnseitig auf das Statorblechpaket aufgesetzten und verschraubten Lagerschilde stets ein radialer Versatz der Welle ergibt, entsteht zwischen den beiden Lagerschilden ein Fluchtungsfehler, der vom Kugellager nicht ausgeglichen werden kann und deshalb lebensdauermindernd auf die Lager wirkt. Ein weiterer Nachteil dieser bekannten Innenläufermotoren besteht darin, daß sich aufgrund der relativ geringen Masse des Rotors Unwuchtprobleme von auf der Welle befestigten Teilen sehr stark bemerkbar machen. Dies hat ebenfalls lebensdauermindernde Auswirkungen auf die Lagerung des Motors.

Aus der US-A 3, 626, 221 ist ebenfalls ein asymmetrischer Spaltpolmotor der eingangs beschriebenen Art bekannt. Der Rotor gemäß dieser Druckschrift ist beidseitig offen ausgebildet und sitzt auf einer sich aus dem Rotor selbst heraus einseitig erstreckenden Lagerhülse, die auf einer feststehenden Welle drehbar gelagert ist. Hierbei ist die Welle im Motorflansch befestigt. Somit besitzt auch dieser Motor im wesentlichen die vorstehend angegebenen Nachteile.

Der vorliegenden Erfindung liegt nun die Aufgabe zugrunde, ausgehend von einem asymmetrischen Spaltpolmotor der eingangs beschriebenen Art, diesen derart zu verbessern, daß eine zuverlässige Lagerung der Motorwelle ohne Fluchtungsfehler gegeben ist, sowie eine verbesserte Wärmeabführung aus dem Lagerbereich erreicht wird und durch über die Motorwelle angetriebenen Teile verursachte Unwuchten besser ausgeglichen werden können, so daß eine große Laufruhe des Motors erreicht wird. Weiterhin besteht die der vorliegenden Erfindung zugrundeliegende Aufgabe darin, eine konstruktiv einfache, kompakte und kostengünstig herstellbare Motorkonstruktion zu schaffen, wobei bei gleicher Leistung wie bei den bekannten Spaltpolmotoren dasselbe Eisenvolumen im Joch vorhanden ist.

Diese Aufgabe wird erfindungsgemäß mit einem asymmetrischen Spaltpolmotor gelöst, der einen Stator aus einem lamellierten Blechpaket aufweist, wobei der Stator aus einem C-förmigen Joch besteht, zwischen dessen freien Jochzangen ein Jochsteg eingepreßt ist, und auf dem Joch eine Hauptwicklung sitzt und im jochzangenverbindenden Schenkel eine kurzgeschlossene Hilfswicklung und in einer Ausnehmung dieses Schenkels ein lamellierter Kurzschlußläuferrotor mit geringem Luftspalt zum Stator auf einer Motorwelle drehbar angeordnet ist, sowie der Kurzschlußläuferrotor als Hohlzylinder mit einseitigem, mit Kühlrippen an seiner Außenseite versehenen Boden ausgebildet ist und ein in seinem Innenraum von seiner offenen Seite her hineinragendes, mit einem Motorflansch einstückig verbundenes Lagertragrohr unmittelbar koaxial umgibt, in dem die Motorwelle in zwei beabstandeten Lagern geführt sowie an dem dem Lagertragrohr gegenüberliegenden Ende mit dem Rotor verbunden ist, sowie das lamellierte Dynamoblechpaket des Stators über Befestigungsmittel am aus wärmebeständigem Material bestehenden Motorflansch befestigt ist.

Erfindungsgemäß wird demnach ein Motor geschaffen, der als Zwischenläufermotor bezeichnet werden kann, da der Rotor zwischen dem Lagertragrohr des Stators und dem Statorblechpaket rotierend angeordnet ist. Dabei liegt der Erfindung die überraschende Erkenntnis zugrunde, daß trotz des im Durchmesser vergrößerten Rotors gegenüber den Rotoren der bekannten asymmetrischen Spaltmotoren gleicher Leistung das Eisenvolumen unverändert bleibt und hierbei wird sogar der zusätzliche Effekt bewirkt, daß der gesamte Motor eine kürzere Baulänge aufweist als Motoren üblicher Bauweise mit gleicher Leistung. Aufgrund der erfindungsgemäßen Ausgestaltung ist es möglich, daß der Motorflansch bei der Bearbeitung der Lagerbohrung an der Außenfläche des Lagertragrohrs aufgenommen wird und eine Bearbeitung der beidseitigen, sich im Innenraum des Lagertragrohrs befindlichen Lagersitze vorgenommen wird. Hierdurch wird ein die Lebensdauer des Kugellagers beeinträchtigender Versatz der beiden Lager ausgeschlossen. Auch die Wärmeübertragung von der Welle auf die Lagerelemente wird erfindungsgemäß weitgehend abgebaut. Dies resultiert daraus, daß der Rotor in axialer Richtung gesehen vor den Lagern befestigt ist und somit als sogenannte Wärmesenke für die Ableitung der auftretenden Temperaturerhöhungen über den Rotor dient. Diese Ableitung wird noch zusätzlich dadurch begünstigt, daß der Rotor infolge der Unterbringung des Lagertragrohres in seinem Innenraum in seinen radialen Abmessungen und damit in seiner Masse relativ groß ausgeführt werden kann. Durch die stirnseitige Anordnung von Kühlrippen in Form von radialen Stegen an der Außenseite des Rotorbodens wird eine zusätzliche Wärmeableitung erreicht, was bei den bekannten Innenläufermotoren nicht möglich ist. Durch die Vergrößerung des Rotors sowie der damit verbundenen Zunahme der Rotormasse ergibt sich der Vorteil, daß an der Welle wirksam werdende Unwuchten, z.B. durch ungleiche Masseverteilungen eines angetriebenen und auf der Welle montierten Lüfterrades, nicht in dem Maße auf die Lagerelemente einwirken, wie dies bei herkömmlichen asymmetrischen Spaltpolmotoren möglich ist.

Aus der US-PS 4, 496, 869 ist bereits ein Elektromotor bekannt, der ein becherförmiges Ständergehäuse besitzt, an dessen Umfangsteil das Ständerpaket mit der Ständerwicklung befestigt ist und wobei vom zentralen Teil des Gehäuses eine Lagerhülse nach innen ragt, und in ihrem Inneren die Lagerkörper für die Motorwelle aufweist, auf der der Rotor befestigt ist, wobei die Lagerhülse in den hohlzylindrischen Rotorkörper hineinragt. Bei diesem Motor ist der Statorblechschnitt symmetrisch aufgebaut. Bei dieser Bauform besteht aber das Problem, daß sich der Wickelvorgang relativ aufwendig gestaltet, insbesondere können die Wicklungen nur durch relativ komplizierte Wickelverfahren, wie z.B. durch Nadelwickler, eingebracht werden.

Aus der US-PS 3,256,453 ist ein Synchronmotor bekannt zur Verwendung in elektrischen Uhren oder dergleichen, bei dem ein permanent-magnetischer Rotor um einen Lagerabsatz des Stators herum drehbar angeordnet ist, wobei der Stator selber aus magnetisierbarem Material besteht. Dieser Rotor ist nicht dazu geeignet, um beispielsweise zum Antrieb von Heißluftgeräten zu dienen, da hier die Motorwelle auf dem Rotor gegenüber liegenden Ende aus dem Stator heraustritt, so daß der Lagerbereich unmittelbar der Wärmebeeinflussung ausgesetzt ist. Weiterhin ragt der die Lager aufnehmende Abschnitt weit aus dem Stator auf der dem Rotor abgekehrten Seite heraus, so daß die Baulänge sich vergrößert und die Lagerung nicht vom Rotor eingeschlossen ist, sondern außerhalb des eigentlichen Motors liegt.

Weitere vorteilhafte Ausführungsformen der Erfindung sind in den Unteransprüchen enthalten. Anhand der in den beiliegenden Zeichnungen dargetelllten Ausführungsbeispiele wird die Erfindung nunmehr näher erläutert. Es zeigen:

Fig. 1 eine Draufsicht auf einen erfindungsgemäßen Motor mit seinem Statorblechpaket und mit seinem Rotor gem. der Schnittlinie I-I in Fig. 2,

Fig. 2 einen Schnitt entlang der Schnittlinie II-II in Fig. 1,

Fig. 3 einen Schnitt entlang der Schnittlinie II-III-III in Fig. 1,

Fig. 4 eine Draufsicht auf einen erfindungsgemäßen Motorflansch,

Fig. 5 bis 8 Ansichten entlang der Schnittlinie III-III in Fig. 1 mit verschiedenen Ausführungsbeispielen für die Lagerung und die Befestigung des Statorblechpaketes,

Fig. 9 einen Schnitt durch zwei alternative Ausführungen des erfindungsgemäßen Motors (obere Hälfte, untere Hälfte).

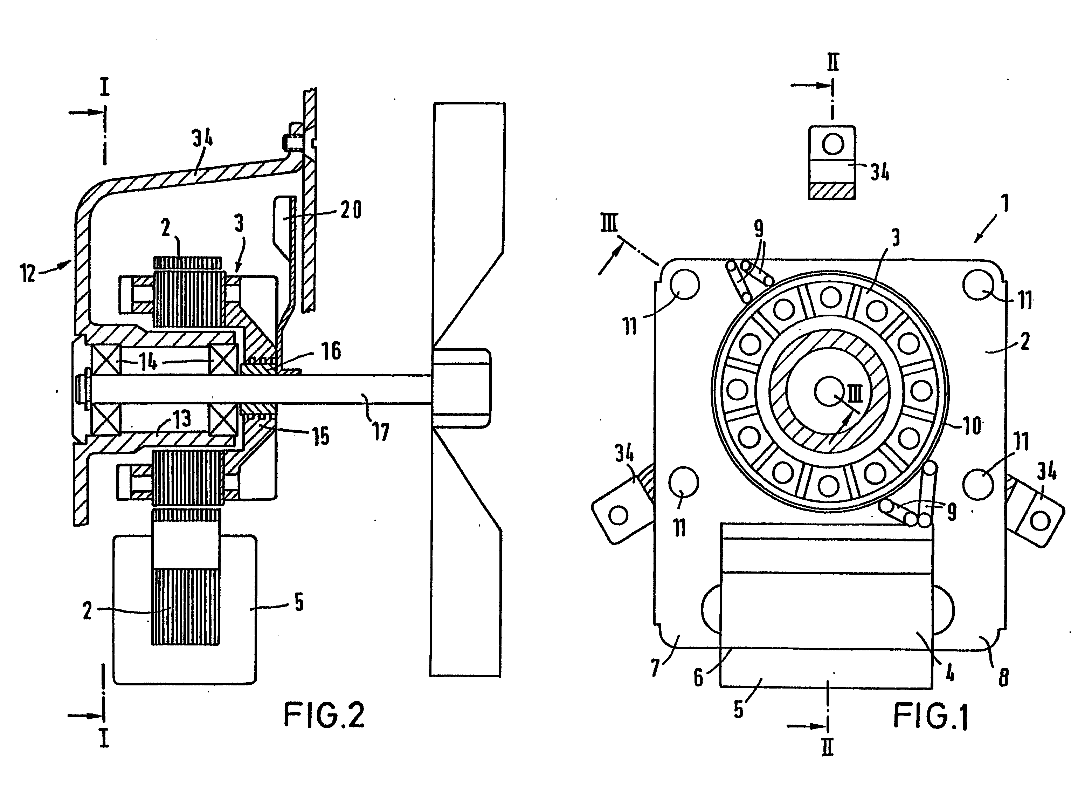

In Fig. 1 ist ein erfindungsgemäßer asymmetrischer Spaltpolmotor 1 dargestellt. Dieser Spaltpolmotor besteht aus einem Dynamoblechpaket als Stator 2 und einem Rotor 3. Die in Fig. 1 dargestellte Ansicht zeigt den erfindungsgemäßen Spaltpolmotor 1 von der Motorflanschseite aus gesehen. Der Rotor 3 ist ebenfalls aus einem aus einzelnen Blechlamellen geschichteten Blechpaket hergestellt. Der Stator 2 und der Rotor 3 sind aufgrund der erfindungsgemäßen Ausbildung des Spaltpolmotors 1 im sogenannten Stanzpaktierverfahren hergestellt. Der Stator ist C-förmig ausgebildet, und sein Jochsteg 4 ist als separates Teil ausgebildet, so daß es herausnehmbar ist. Hierdurch ergibt sich die Möglichkeit einer rationellen Fertigung von einer auf dem Joch aufgebrachten Erregerspule 5 (Hauptwicklung). Denn die Erregerspule 5 kann auf einen Spulenkörper im herausgenommenen Zustand des Jochsteges gewickelt werden, und zwar auf einen auf das Joch aufgeschobenen Spulenkörper 6. Nach dem Bewickeln des Jochsteges 4 mit der Erregerwicklung kann dann der Jochsteg 4 zwischen den beiden Jochzangen 7 und 8 des Stators 2 durch Einpressen befestigt werden. Weiterhin weist der Stator 2 Hilfswicklungen 9 auf, die beispielsweise aus blanken, kurzgeschlossenen Kupferwicklungen bestehen. Die Hilfswicklungen 9 sind einander diagonal gegenüberliegend am Umfang der den Rotor 3 aufnehmenden Öffnung 10 im Stator 2 ausgebildet. Im Stator 2 sind vorzugsweise vier Bohrungen 11 ausgebildet, die in den Ecken eines Viereckes, insbesondere Quadrats, angeordnet sind, durch dessen Mittelpunkt die Drehachse des Rotors 3 verläuft.

Wie sich aus Fig. 2 ergibt, ist der Motorflansch 12, der zur Befestigung des Motors dient, mit einem Lagertragrohr 13 versehen, wobei das Lagertragrohr 13 einstückig mit dem Motorflansch 12 ist. Dieses Lagertragrohr 13 verläuft koaxial zum Rotor 3, der das Lagertragrohr 13 umschließt und vorzugsweise vollständig aufnimmt. Erfindungsgemäß ist der Rotor 3 becherförmig ausgebildet, so daß das Lagertragrohr 13 von der offenen Seite des Rotors 3 her in diesen hineinragt. In dem Lagertragrohr 13 sind Lagerkörper 14 angeordnet, und zwar vorzugsweise jeweils in den beiden Endbereichen des Lagertragrohres 13. Diese Lagerkörper 14 können aus Kugellagern, Gleitlagern oder aus einer Kombination von beiden bestehen. Aufgrund der einstückigen Ausführung von Motorflansch 12 und Lagertragrohr 13 können die Lagersitze für die Lagerkörper 14 derart von innen bearbeitet werden, daß Fluchtungsfehler zwischen den beiden Lagerkörpern praktisch ausgeschlossen sind. Hierzu wird das am Motorflansch 12 befestigte Lagertragrohr 13 an seiner Außenseite eingespannt und an seiner Innenseite beidseitig gleichzeitig bearbeitet.

Der hohlzylindrische Rotor 3 weist an dem dem Lagertragrohr gegenüberliegenden Ende einen Boden 15 mit einer Buchse 16 auf, über die der Rotor 3 mit einer Welle 17 kraftschlüssig verbunden ist. Wie bereits ausgeführt, besteht der Rotor 3 aus einzelnen aufeinandergeschichteten Blechlamellen. Diese sind bei dem erfindungsgemäßen Motor, wie an sich bekannt, durch eine Kurzschlußwicklung, die aus Aluminium bzw. einer Aluminiumlegierung besteht, miteinander und mit stirnseitigen Kurzschlußringen verbunden. Der Boden 15 des Rotors 3 ist vorzugsweise vollständig geschlossen und weist dabei an seiner Außenseite Kühlrippen auf. Alternativ kann er auch aus radialen Stegen gebildet werden, zwischen denen der Rotorboden zur besseren Kühlung der Lagerelemente Öffnungen aufweist. Wie in der Fig. 2 dargestellt, kann bei besonders hohen thermischen Belastungen auch ein zusätzliches Kühlrad 20 auf der Welle 17 außerhalb des erfindungsgemäßen Motors angeordnet sein. Die Welle 17 ist in bekannter Weise im Innern des Lagertragrohres 13 gelagert. Auf dem verlängerten, der Außenseite des Bodens 15 zugewandten Wellenende kann ein Lüfterrad, z. B. für eine Heißluftumwälzung, befestigt werden.

Durch den erfindungsgemäßen Aufbau des Motors 1 mit der Unterbringung der Lagerung innerhalb des Rotors 3 ergibt sich aufgrund der radialen Vergrößerung des Rotors sowie der damit verbundenen Massezunahme eine ausgezeichnete Wärmeableitung über den Rotor nach außen. Eine thermische Belastung der Lagerelemente wird hierbei weitgehend vermieden. Außerdem wird durch diese erfindungsgemäße Bauform eine Erhöhung des Massenträgheitsmomentes erreicht, was bei ausgewuchteten Motoren für eine große Laufruhe des Motors sorgt. Zudem wirken sich eventuell vorhandene Restunwuchten, z. B. eines auf der Welle aufgesetzten Lüfterrades 33, infolge des vergrößerten Massenträgheitsmomentes des Rotors nur in vermindertem Maße auf die Laufruhe des Motors aus. Zum Auswuchten des Rotors können an dessen beiden Stirnseiten in Umfangsrichtung gleichmäßig verteilte Bohrungen vorgesehen sein.

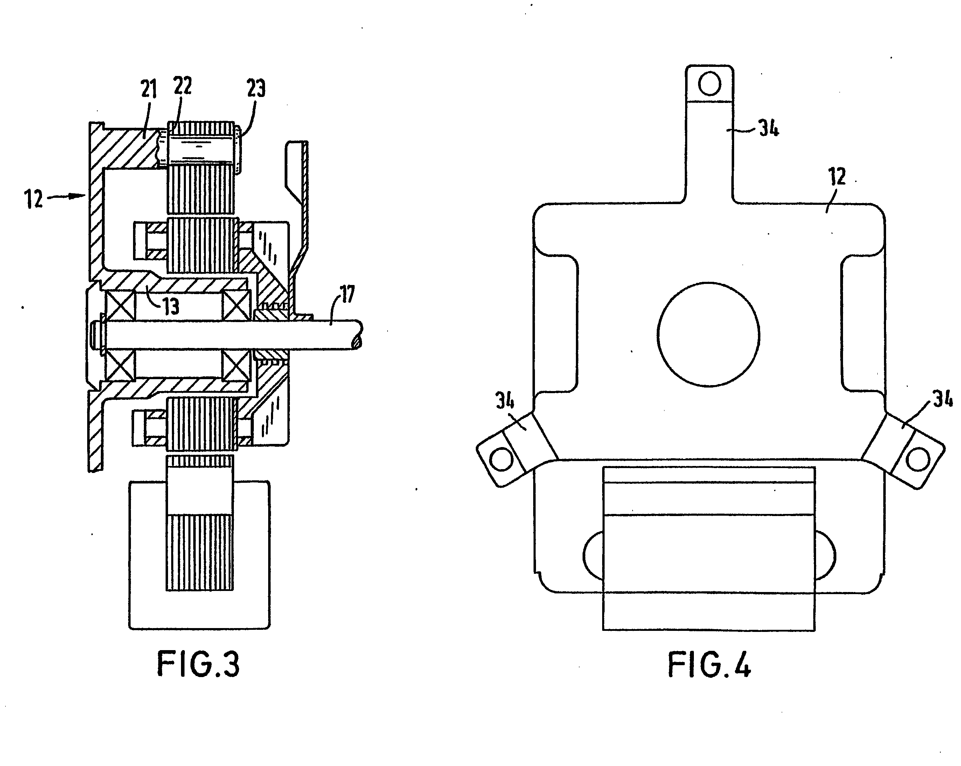

Wie sich aus Fig. 3 ergibt, wird der Stator 2 mittels Zapfen 21 am Motorflansch 12 befestigt. Diese Zapfen 21 verlaufen durch die Bohrungen 11 des Stators 2, wobei das den Stator 2 bildende Blechpaket bis zu einem Anschlag 22, der an den Zapfen 21 ausgebildet ist, aufgeschoben ist. Wie sich weiter aus Fig. 3 ergibt, wird das Ende der Zapfen 21 nach dem Aufschieben des Statorblechpaketes aufgebördelt, so daß ein Bördelrand 23 entsteht, durch den das Statorblechpaket zusammengehalten wird. Aufgrund dieser erfindungsgemäßen Befestigungsart des Statorblechpaketes ist es möglich, dieses nach dem Stanzpaketierverfahren vorzufertigen. Eine zusätzliche Maßnahme wie z. B. Verschweißen, Verschrauben oder dergleichen, um die einzelnen Blechlamellen des Statorblechpaketes zusammenzuhalten, ist nicht erforderlich.

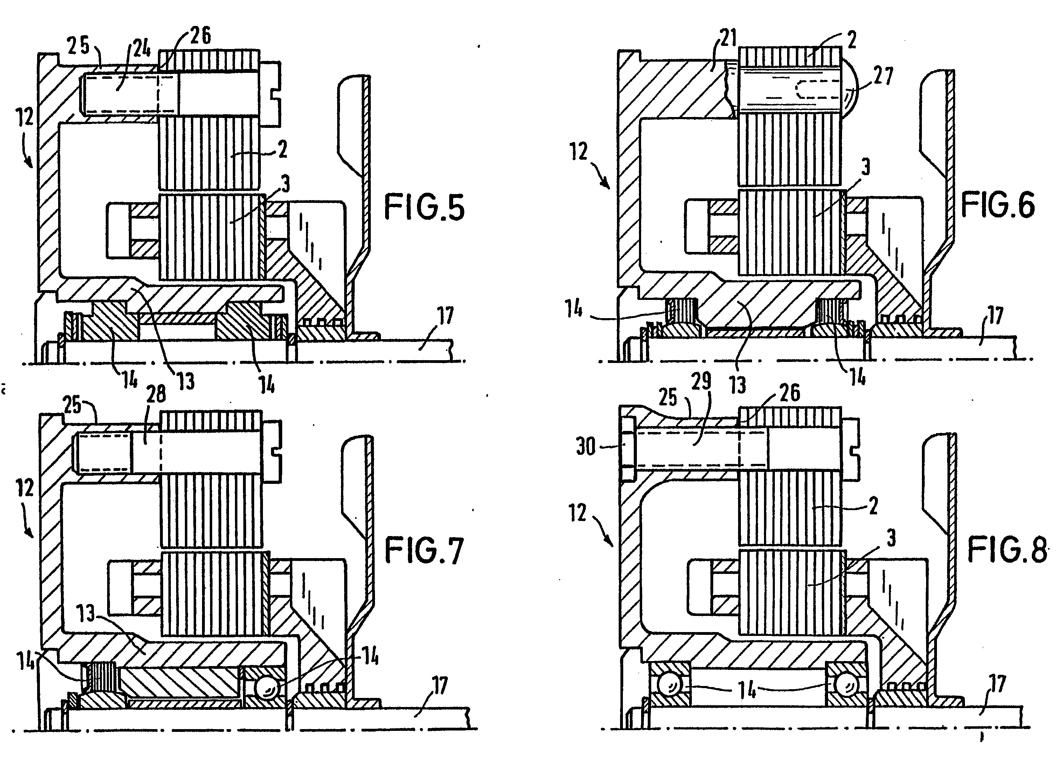

In den Fig. 5 bis 8 sind weitere Varianten für die Befestigung des Statorblechpaketes dargestellt.

In Fig. 5 ist eine Befestigung des den Stator 2 bildenden Blechpaketes mittels Gewindeschrauben 24 gezeigt, wobei die Gewindeschrauben 24 in Hohlzylinderansätze 25 des Motorflansches 12 eingeschraubt werden, die ein entsprechendes Innengewinde aufweisen. Die Zylinderansätze 25 sind zur Zentrierung und als Montagehilfe für das Blechpaket des Stators an ihren freien Enden mit einem umlaufenden Absatz 26 versehen, der in die im Statorblechpaket befindliche Bohrung hineinragt. Die Lagerkörper 14 können beispielsweise als Gleitlager ausgebildet sein.

In Fig. 6 ist eine Befestigung des Statorblechpaketes mit Hilfe von Hohlnieten 27 gezeigt. Diese Hohlniete werden in die freien Enden der Zapfen 21 eingenietet. Diese Hohlniete 27 dienen wiederum zum Zusammenhalten des Statorblechpaketes sowie zu dessen Befestigung. Die Lagerkörper 14 können beispielsweise als Kalottenlager ausgebildet sein. Anstatt von Hohlnieten können auch Vollniete verwendet werden.

In Fig. 7 ist eine Befestigung des Statorblechpaketes dargestellt, die aus einer Schraube 28 besteht, die nur in ihrem vorderen Bereich ein Gewinde aufweist und im übrigen zylindrisch ausgebildet ist. Der zylindrische Bereich ist länger als die Höhe des Statorblechpaketes, so daß die Schraube 28 mit ihrem zylindrischen Bereich aus dem Statorblechpaket herausragt und der zylindrische Bereich noch von der Bohrung des Ansatzes 25 aufgenommen wird, weshalb der Ansatz 25 nur in seinem unteren Bereich ein Gewinde aufweist. Der Außendurchmesser des zylindrischen Bereichs der Schraube 28 ist nur geringfügig kleiner als der Innendurchmesser der Bohrungen 11 im Statorblechpaket. Durch diese erfindungsgemäße Ausbildung ergibt sich bereits beim Einschieben der Schrauben 28 eine Zentrierung des Stators. Als Anschlag für das Statorblechpaket dient das Stirnende des Zylinderansatzes 25, so daß das Statorblechpaket zwischen dem Schraubekopf und diesem Stirnende eingespannt ist. Die Lagerung der Welle 17 kann aus einer Kombination aus Gleitlager, insbesondere Kalottenlager, und Kugellager bestehen. Hierbei wird auf dem dem Motorflansch 12 zugewandten Ende das Gleitlager und auf der gegenüberliegenden Seite das Kugellager angeordnet sein.

In Fig. 8 ist ein weiteres Ausführungsbeispiel für die Befestigung des Statorblechpaketes gezeigt, und zwar mittels einer Gewindeschraube mit Mutter, wobei die Mutter innerhalb des Motorflansches angeordnet ist. Bei dieser Ausführungsform weist der Zylinderansatz 25 einen Zentrierungsabsatz 26 auf, der in die Bohrungen 11 des Statorblechpaketes eingreift. Zur Aufnahme der Gewindeschraube 29 weist der Zylinderansatz 25 eine durchgehende Bohrung auf. Die Lagerung der Welle erfolgt durch Kugellager. In Fig. 4 ist eine Ansicht eines erfindungsgemäßen Motors von der Seite des Motorflansches 12 aus gezeigt. Das gezeigte Ausführungsbeispiel wird als Heißluftgebläse verwendet. Hierzu besitzt der Motorflansch 12 drei bogenförmige Befestigungsarme 34, die sich an einer Rückwand eines nicht dargestellten Gerätes abstützen. Der Motorflansch wird vorzugsweise aus Aluminiumdruckguß hergestellt, wenn eine erhöhte thermische Belastung z. B. bei der Verwendung für Heißluftgebläse vorliegt. Für andere Ausführungen ist auch die Herstellung aus geeigneten Kunststoffmaterialien möglich.

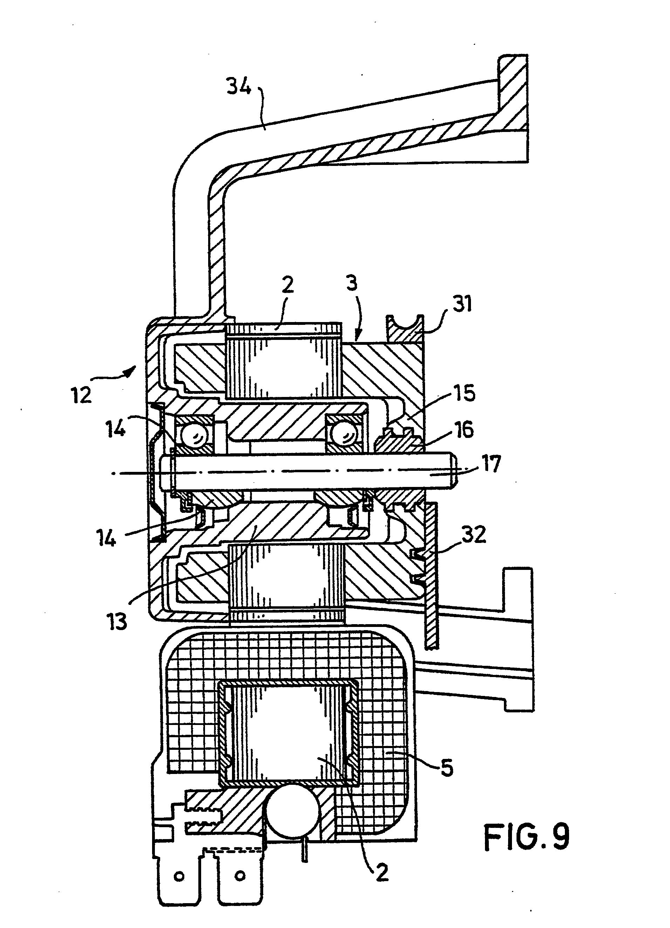

In Fig. 9 sind zwei weitere Ausführungsvarianten eines erfindungsgemäßen Motors dargestellt. Hierbei entspricht in der oberen Hälfte der grundsätzliche Aufbau der Lagerung der Ausführungsform wie in Fig. 8 beschrieben. In dem dargestellten Ausführungsbeispiel ist eine Riemenscheibe 31 auf dem Rotor 3 befestigt. Mittels dieser Riemenscheibe kann der erfindungsgemäße Motor als Antriebsaggregat dienen. Die Riemenscheibe kann auch einstückig mit dem Rotor 3 ausgebildet sein.

In Fig. 9, untere Hälfte, ist eine Variante gezeigt, wo an der Stirnseite des Rotors 3 eine Impulsgeberscheibe 32 befestigt ist. Die Lagerung in Fig. 9, untere Hälfte, entspricht grundsätzlich der Ausführungsform in Fig. 6.

Die beiden dargestellten Varianten sind deshalb möglich, da erfindungsgemäß der Rotor auf der dem Motorflansch 12 abgekehrten Seite frei zugänglich ist und insofern für verschiedenste Antriebs-, Meß- und Anzeigezwecke verwendet werden kann. Auch liegt es im Rahmen der Erfindung, die Außenseite des Rotors mit einer Außenverzahnung zu versehen, so daß der Rotor teil eines Getriebeantriebes sein kann.

Weiterhin liegt es im Rahmen der Erfindung, wenn die Motorwelle 17 auch über den Motorflansch 12 hinaus nach außen verlängert ist.

In den Figuren 1 bis 9 sind gleiche Teile mit denselben Bezugsziffern versehen.

Die vorliegende Erfindung ist nicht auf die beschriebenen Ausführungsbeispiele beschränkt, sondern umfaßt alle im Sinne der Erfindung gleichwirkenden Ausführungen. Gegenüber den bekannten asymmetrischen Spaltpolmotoren besitzt der erfindungsgemäße Motor bei gleicher Leistung zwar verlängerte Schenkellängen bzw. Zangenlängen des lamellierten Stators, jedoch ergibt sich eine wesentlich reduzierte Dicke des Eisenpaketes, so daß damit eine sehr flache Bauweise erreicht wird. Dies basiert auf der Erkenntnis, daß der erfindungsgemäße Motor keine Erhöhung des Eisenvolumens gegenüber leistungsgleichen, bekannten asymmetrischen Spaltmotoren erfordert, obwohl der erfindungsgemäß vorgesehene Rotor gegenüber den Rotoren leistungsgleicher, bekannter Spaltpolmotoren durchmesservergrößert ist.

**Patentansprüche**

1. Asymmetrischer Spaltpolmotor mit einem Stator (2) aus einem lamellierten Blechpaket, gebildet aus einem C-förmigen Joch, zwischen dessen freien Jochzangen ein Jochsteg eingepreßt ist, auf dem eine Hauptwicklung (5) sitzt und im jochzangenverbindenden Schenkel eine kurzgeschlossene Hilfswicklung (9) und in einer Ausnehmung dieses Schenkels ein lamellierter Kurzschlußläuferrotor (3) mit geringem Luftspalt zum Stator (4) auf eine Motorwelle (17) drehbar angeordnet ist, wobei der Kurzschlußläuferrotor (3) als Hohlzylinder mit einseitigem, mit Kühlrippen an seiner Außenseite versehenem Boden (15) ausgebildet ist und ein in seinem Innenraum von seiner offenen Seite her hineinragendes, mit einem Motorflansch (12) einstückig verbundenes Lagertragrohr (13) unmittelbar koaxial umgibt, in dem die Motorwelle (17) in zwei beabstandeten Lagern (14) geführt sowie an dem dem Lagertragrohr (13) gegenüberliegenden Ende mit dem Rotor (3) verbunden ist sowie das lamellierte Dynamoblechpaket des Stators (2) über Befestigungsmittel (21, 22, 23, 24, 25, 26, 27, 28, 29, 30) am aus wärmebeständigem Material bestehenden Motorflansch (12) befestigt ist.

2. Asymmetrischer Spaltpolmotor nach Anspruch 1, dadurch gekennzeichnet, daß der Rotor als Kurzschlußläufer mit Aluminiumkäfig ausgebildet ist.

3. Asymmetrischer Spaltpolmotor nach Anspruch 1 oder 2, dadurch gekennzeichnet, daß der Rotor (3) in dem Boden (15) eine Buchse (16) aufweist, in der die Welle (17) kraftschlüssig geführt ist.

4. Asymmetrischer Spaltpolmotor nach einem der Ansprüche 1 bis 3, dadurch gekennzeichnet, daß die Befestigungsmittel aus mehreren Zapfen (21) bestehen, die durch Bohrungen (11) im Stator (2) verlaufen und mit ihren freien Enden den Stator (2) umfassen.

5. Asymmetrischer Spaltpolmotor nach einem der Ansprüche 1 bis 4, dadurch gekennzeichnet, daß die Befestigungsmittel aus einer Gewindeschraube (24), einem Hohlniet (27), einem Vollniet oder einer Schraubbolzen-Mutter-Verbindung (29, 30) bestehen.

6. Asymmetrischer Spaltpolmotor nach einem der Ansprüche 1 bis 5, dadurch gekennzeichnet, daß die Lager (14) als Kugel- und/oder Gleitlager ausgebildet sind.

7. Asymmetrischer Spaltpolmotor nach einem der Ansprüche 1 bis 6, dadurch gekennzeichnet, daß der Boden (15) des Rotors (3) zwischen den Kühlrippen Öffnungen aufweist.

8. Asymmetrischer Spaltpolmotor nach einem der Ansprüche 1 bis 7, dadurch gekennzeichnet, daß am Rotor auf der dem Stator abgekehrten Seite ein Lüfterrad (20) und/oder eine Antriebsscheibe (31) und/oder eine Impulsscheibe (32) und/oder eine Verzahnung oder dergleichen ausgebildet sind.

9. Asymmetrischer Spaltpolmotor nach einem der Ansprüche 1 bis 8, dadurch gekennzeichnet, daß auf der Motorwelle aus ihrem aus dem Rotor herausragenden Ende ein Heißluftgebläserad (33) befestigt ist.

10. Asymmetrischer Spaltpolmotor nach einem der Ansprüche 1 bis 9, dadurch gekennzeichnet, daß der Motorflansch (12) aus Al-Druckguß besteht.

11. Asymmetrischer Spaltpolmotor nach einem der Ansprüche 1 bis 10, dadurch gekennzeichnet, daß der Motorflansch (12) drei bogenförmige Befestigungsarme (34) zum Abstützen an einer Gehäuserückwand besitzt.

12. Asymmetrischer Spaltpolmotor nach einem der Ansprüche 1 bis 11, dadurch gekennzeichnet, daß die Motorwelle (17) über den Motorflansch (12) hinaus nach außen verlängert ist.

## Claims

1. Asymmetrical split pole motor with a stator (2) of a a laminated sheet package, formed from a C-shaped yoke, between the free projections of which is pressed a yoke pin on which a main winding (5) is located and in the yoke projection connecting limb a short circuited auxiliary winding (9) and in a recess of this limb is located a lamellar short circuit rotor (3) with a small air gap to the stator (4) on a motor shaft (17), wherein the short circuit rotor (3) is constructed as a hollow cylinder with cooling ribs on its base (15) on its outer side and is surrounded immediately coaxially on its inner side by a bearing mounting tube (13) integrally bound with a rotor flange (12) projecting from its open side, in which the motor shaft (17) is passed through two spaced bearings (14) and is attached to the rotor (3) at the end opposite the bearing mounting tube (13) and the lamellar dynamo sheet package of the stator (2) is secured by means of an attachment (21, 22, 23, 24, 25, 16, 27, 28, 29, 30) to the motor flange (12) of heat resistant material.

2. An asymmetrical split pole motor according to claim 1, characterised in that the rotor is construction as a short circuit runner with an aluminium cage.

3. An asymmetrical split pole motor according to claim 1 or 2, characterised in that the rotor (3) has a sleeve (16) in the base (15) into which the shaft (17) is forced.

4. An asymmetrical split pole motor according to one of claims 1 to 3, characterised in that the securing means consist of several pegs (21) which run through holes (11) in the stator (2) and secure the stator (2) with their free ends.

5. An asymmetrical split pole motor according to one of claims 1 to 4, characterised in that the securing means consist of a threaded bolt (24), a hollow rivet (27), a solid rivet or a threaded bolt/nut connection (29, 30).

6. An asymmetrical split pole motor according to one of claims 1 to 5, characterised in that the bearing (14) consists of a ball bearing and/or a slip bearing.

7. An asymmetrical split pole motor according to one of claims 1 to 6, characterised in that the base (15) of the rotor (3) has openings between the cooling ribs.

8. An asymmetrical split pole motor according to one of claims 1 to 7, characterised in that a fan wheel (2) and/or a drive disc (31) and/or an impulse disc (32) and/or dentition or the like is formed on the rotor on the side away from the stator.

9. An asymmetrical split pole motor according to one of claims 1 to 8, characterised in that a hot air blowing wheel (33) is secured to the motor shaft on its end projecting from the rotor.

10. An asymmetrical split pole motor according to one of claims 1 to 9, characterised in that the motor flange (12) consists of diecast aluminium.

11. An asymmetrical split pole motor according to one of claims 1 to 10, characterised in that the motor flange (12) has two bow-shaped securing arms (34) for support on a housing back wall.

12. An asymmetrical split pole motor according to one of claims 1 to 11, characterised in that the motor shaft (17) is extended rearwards beyond the motor flange (12).

## Revendications

1. Moteur asymétrique à pôles fendus avec un stator (2) en paquet de tôles à lamelles, en forme de C, une barrette étant emmanchée entre les deux branches libres du C sur laquelle se trouve un bobinage (5) principal et sont disposés, au niveau de l'arche du C, un bobinage (9) secondaire en court-circuit et, au sein d'une réserve de cette arche, un induit (3) en court-circuit à lamelles séparé par un faible espace du stator (2) et monté tournant sur un arbre (17) de moteur, l'induit (3) en court-circuit se présentant sous la forme d'un cylindre creux ayant d'un côté un fond (15) muni extérieurement d'ailettes de refroidissement et entourant directement, de façon coaxiale, un support (13) de paliers cylindrique pénétrant en son sein par son côté ouvert, solidaire d'un flasque (12) de moteur, dans lequel l'arbre (17) de moteur est guidé sur deux paliers (14) séparés l'un de l'autre et est assujetti à l'induit (3) au niveau de l'extrémité en face du support (13) de paliers cylindrique, le paquet de tôles de dynamo à lamelles du stator (2) étant fixé par des moyens de fixation (21, 22, 23, 24, 25, 26, 27, 28, 29, 30) au flasque (12) de moteur constitué d'un matériau résistant à la chaleur.

2. Moteur asymétrique à pôles fendus selon la revendication 1, caractérisé en ce que l'induit est un induit en court-circuit avec cage d'aluminium.

3. Moteur asymétrique à pôles fendus selon la revendication 1 ou la revendication 2, caractérisé en ce que le fond (15) de l'induit (3) comporte une douille (16) dans laquelle l'arbre (17) est guidé par gravité.

4. Moteur asymétrique à pôles fendus selon l'une quelconque des revendications 1 à 3, caractérisé en ce que les moyens de fixation consistent en plusieurs tenons qui traversent le stator (2) par des trous (11) et enserrent le stator (2) de leurs extrémités libres.

5. Moteur asymétrique à pôles fendus selon une quelconque des revendications 1 à 4, caractérisé en ce que les moyens de fixation sont constitués par une vis à filetage (24), un rivet (27) deux pièces tubulaire, un rivet plein ou une liaison écrou-boulon (29, 30).

6. Moteur asymétrique à pôles fendus selon l'une quelconque des revendications 1 à 5, caractérisé en ce que les paliers (14) sont des paliers glissants et/ou à roulement à billes.

7. Moteur asymétrique à pôles fendus selon l'une quelconque des revendications 1 à 6, caractérisé en ce que le fond (15) de l'induit (3) présente des ouvertures entre les ailettes de refroidissement.

8. Moteur asymétrique à pôles fendus selon l'une quelconque des revendications 1 à 7, caractérisé en ce qu'une hélice (20) de ventilateur et/ou un disque d'entraînement (31) et/ou un plateau d'impulsion (32) et/ou un engrenage ou similaire sont associés à l'induit du côté opposé au stator.

9. Moteur asymétrique à pôles fendus selon l'une quelconque des revendications 1 à 8, caractérisé en ce qu'une hélice (33) de soufflante d'air chaud est fixée à l'arbre de moteur sur son extrémité ressortant de l'induit.

10. Moteur asymétrique à pôles fendus selon l'une quelconque des revendications 1 à 9, caractérisé en ce que le flasque (12) de moteur est en aluminium coulé sous pression.

11. Moteur asymétrique à pôles fendus selon l'une quelconque des revendications 1 à 10, caractérisé en ce que le flasque (12) de moteur possède trois bras (34) de fixation en forme d'arc pour reposer sur un dos d'un boîtier.

12. Moteur asymétrique à pôles fendus selon l'une quelconque des revendications 1 à 11, caractérisé en ce que l'arbre (17) de moteur se prolonge vers l'extérieur au-delà du flasque (12) de moteur.

FIG.1

FIG.2

FIG.4

FIG.3

FIG.5

FIG.6

FIG.7

FIG.8

FIG.9